# EUROPEAN PATENT SPECIFICATION

(11) **EP 3 979 242 B1**
(45) Date of publication and mention of the grant of the patent: **01.10.2025**
(21) Application number: 19930682.0
(22) Date of filing: 31.05.2019
(51) Int. Cl.: G11B 3/60, G11B 19/20, G11B 33/10

(54) **DETECTION DEVICE AND PLAYBACK CONTROL SYSTEM**
DETEKTIONSVORRICHTUNG UND WIEDERGABESTEUERUNGSSYSTEM
DISPOSITIF DE DÉTECTION ET SYSTÈME DE COMMANDE DE LECTURE

(43) Date of publication of application: 06.04.2022
(73) Proprietor: AlphaTheta Corporation, Nishi-ku, Yokohama-shi Kanagawa 220-0012 (JP)
(72) Inventor: INOUE, Hiroya, Yokohama-shi, Kanagawa 220-0012 (JP); SHIBA, Katsuhiro, Yokohama-shi, Kanagawa 220-0012 (JP); SASAKI, Kenji, Yokohama-shi, Kanagawa 220-0012 (JP); TAKAGI, Nao, Yokohama-shi, Kanagawa 220-0012 (JP)
(74) Representative: Gille Hrabal Partnerschaftsgesellschaft mbB Patentanwälte
(86) International application number: PCT/JP2019/021833
(87) International publication number: WO 2020/240856

(56) References cited:
- WO-A1-97/33282
- JP-A- 2013 211 086
- JP-U- S5 454 308
- US-A- 5 350 882
- US-A1- 2015 348 581

## Description

### TECHNICAL FIELD

The present invention relates to a detection device and a playback control system.

### BACKGROUND ART

There is conventionally known a device including a turntable and a smartphone that is put in a recess of the turntable to rotate with the turntable, and configured to play music in accordance with a rotation operation performed on the turntable (see, for instance, Patent Literature 1).

The device described in Patent Literature 1 is used for DJ play or the like. The device detects rotation of the turntable by a motion detection circuit, such as an accelerometer and a gyroscope provided for a smartphone, to play music in accordance with the detected rotation state of the turntable.

WO 97/33282 A1 discloses a device and a method for controlling the playback speed of a compact disc inserted into a playback device. In order to be able to individually influence the rotational speed of a CD, including the playing of the frames in reverse order, it is proposed that the CD player be connected to a turntable with a motor-driven turntable in such a way that the current turntable speed or the speed of rotation of a disc arranged on the turntable supplies the manipulated variable for the CD playback speed.

US 5 350 882 A discloses an automatic performance apparatus which easily changes the tempo and direction of automatic performance of a musical instrument, for example, to a rhythm of a rap music such that a disc jockey operates a scratch disc.

JP S54 54308 U discloses a record player, wherein a tongue-shaped piece is integrally connected to a shaft that supports a turntable or the like, and a coil is wound around the tongue-shaped piece to serve as a stator of a motor for driving the turntable.

JP 2013 211086 A discloses an optical disk reproducing apparatus, which includes an operation disk portion which has an electrode sheet portion pivoted rotatably to detect capacitance; a rotary shaft which is fixed to the operation disk portion and electrically connected to the electrode sheet; a bearing portion on which the rotary shaft is pivoted and which is electrically connected to the rotary shaft; and a touch determination portion which determines whether the operation disk portion is touched with a finger on the basis of change in capacitance value of the capacitance of the operation disk portion that the electrode sheet portion detects through the rotary shaft and the bearing portion.

### CITATION LIST

### PATENT LITERATURE(S)

Patent Literature 1: US Patent Application Publication No. 2017/0010694

### SUMMARY OF THE INVENTION

### PROBLEM(S) TO BE SOLVED BY THE INVENTION

Here, a detection signal by the gyroscope includes a characteristic error of the gyroscope. Thus, when the device described in Patent Literature 1 detects the rotation of the turntable by the gyroscope of the smartphone, the detected rotation state of the turntable may be inconsistent with an actual rotation state of the turntable due to the above characteristic error. This may make it impossible for the device to accurately detect a DJ's operation performed on the turntable.

An object of the invention is to solve at least a part of the above problem and to provide a detection device and a playback control system capable of detecting an input operation with high accuracy.

### MEANS FOR SOLVING THE PROBLEMS

A detection device according to a first aspect of the invention includes the features of the independent claim. Advantageous embodiments are subject matter of the dependent claims.

A playback control system according to a second aspect of the invention includes the detection device and a controller configured to transmit a playback control signal with which a playback state of a music piece is controlled based on the rotation information transmitted from the detection device.

The detection device according to the first aspect and the playback control system according to the second aspect can detect an input operation with high accuracy.

### BRIEF DESCRIPTION OF DRAWING(S)

Fig. 1 schematically shows a structure of a playback control system according to an exemplary embodiment.
Fig. 2 schematically shows an internal structure of an operation unit according to the exemplary embodiment.
Fig. 3 is a block diagram showing a configuration of a control section according to the exemplary embodiment.

### DESCRIPTION OF EMBODIMENT(S)

An exemplary embodiment of the invention is described below with reference to the attached drawings.

### Schematic Structure of Playback Control System

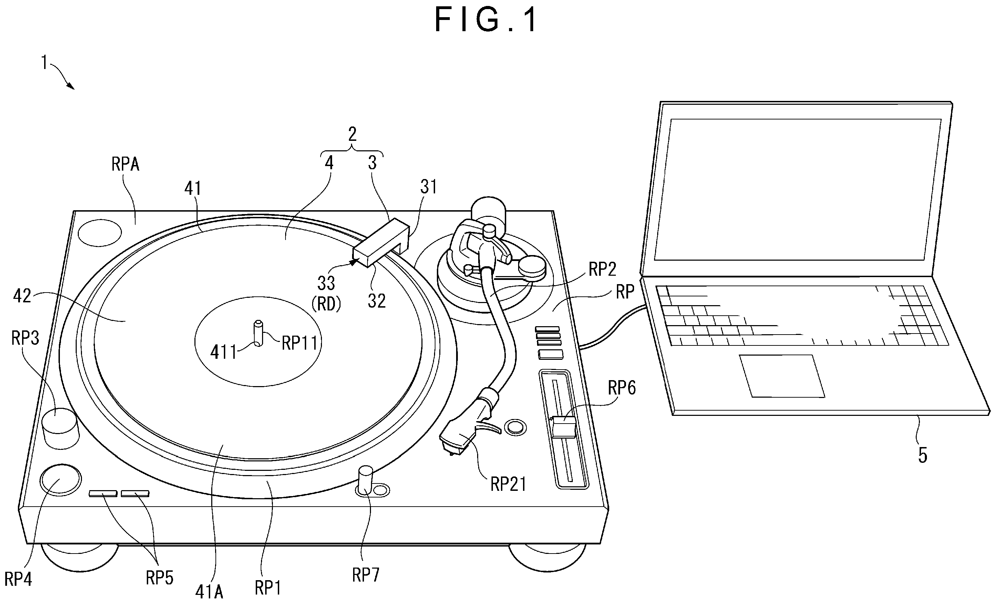

Fig. 1 schematically shows a structure of a playback control system 1 according to the exemplary embodiment.

As shown in Fig. 1, the playback control system 1 according to the exemplary embodiment includes an operation device 2 provided for a record player RP and a controller 5 for receiving operation information transmitted from the operation device 2. The playback control system 1 outputs a playback control signal in accordance with an operator's operation performed on a turntable RP1 of the record player RP.

### Details of Record Player

Here, an example of the record player RP provided with the operation device 2 is explained.

The record player RP, which is configured to play an analog record disk (hereinafter abbreviated as a record disk), is used for DJ performance or the like in a concert or club scene. The record player RP includes the turntable RP1, a tone arm RP2, a power switch RP3, a start/stop button RP4, speed change buttons RP5, a tempo slider RP6, and an illuminator RP7.

The turntable RP1 has a circular shape on which a record disk is placeable. The turntable RP1 is rotatably provided at a substantially center portion of a top surface RPA of the record player RP. The turntable RP1 is rotated by a motor (not shown) accommodated in the record player RP.

The tone arm RP2 is provided pivotally with a corner of the top surface of record player RP as the center. A headshell RP21 is provided at an end of the tone arm RP2. A cartridge attached with a stylus for playing the record disk is installed at an end of the headshell RP21.

In a case of playing a music piece recorded on the record disk, the turntable RP1 on which the record disk is placed is rotated at a constant speed and the stylus provided at the end of the tone arm RP2 is put on the record disk. In this state, an operator can do DJ performance, such as scratch or pitchbend, by rotating the turntable RP1 forwardly or reversely or reducing the rotation speed.

The power switch RP3 and the start/stop button RP4 are provided on the left of the turntable RP1. An operator can rotate or stop the turntable RP1 by operating the power switch RP3 and/or the start/stop button RP4.

The speed change buttons RP5 are provided on the right of the start/stop button RP4. Operating the speed change button(s) RP5 by an operator makes it possible to set the rotation speed of the turntable RP1 at 33RPM suitable for playback of a long-playing record (LP disk) or to set the rotation speed of the turntable RP1 at 45RPM suitable for playback of an extended play record (EP disk).

The tempo slider RP6 is provided on the right of the tone arm RP2. An operator can adjust a playback speed of the record disk by operating the tempo slider RP6.

The illuminator RP7 is provided on the right of an outer circumference of the turntable RP1. The illuminator RP7 illuminates a position where the stylus is to be put on the record disk.

### Details of Operation Device

The operation device 2 detects an operator's input operation performed on the turntable RP1 by detecting a rotation state of the turntable RP1, and transmits operation information for operating a playback state of music piece data in accordance with the input operation detected. Specifically, the operation device 2 transmits, as a piece of operation information, rotation information showing the rotation state of the turntable RP1 (i.e., rotation information including a rotation angle, rotation direction, and rotation speed of the turntable RP1). In other words, the operation device 2 is a detection device for detecting the rotation state of the turntable RP1.

The operation device 2 includes a stationary body 3 and an operation unit 4.

### Details of Stationary Body

As shown in Fig. 1, the stationary body 3 is provided to be removable on a part of the top surface RPA of the record player RP other than an area where the turntable RP1 is provided. The stationary body 3, which is formed into a substantially L-shape, includes a standing portion 31 that stands from the top surface RPA in a normal direction of the top surface RPA and an extending portion 32 that is bent at an end of the standing portion 31 and extends in substantially parallel with the top surface RPA.

In the stationary body 3, the extending portion 32 contains a magnetic body 33. The magnetic body 33 generates a magnetic field acting on hall elements 43 of a rotating body 41 placed on the turntable RP1.

### Details of Operation Unit

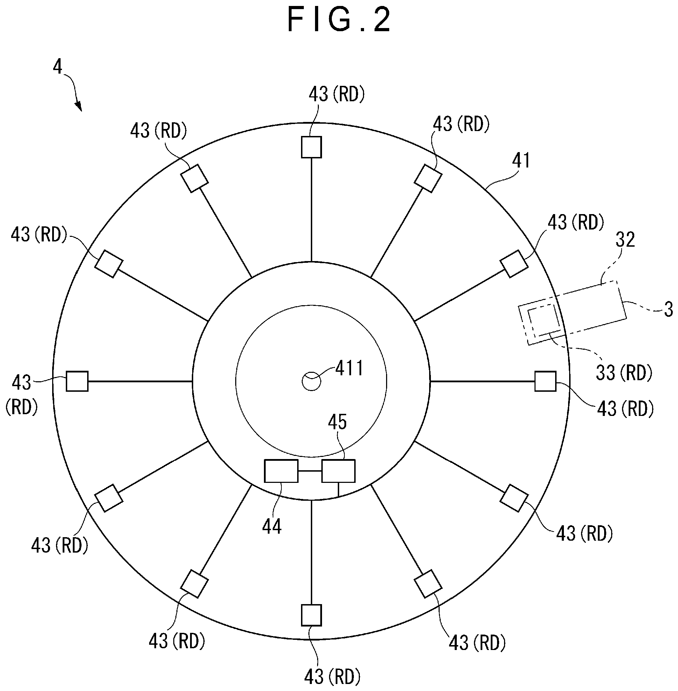

Fig. 2 schematically shows an internal structure of the operation unit 4.

The operation unit 4 is placed on the turntable RP1 in place of a record disk. The operation unit 4 detects a rotation state of the turntable RP1 in cooperation with the stationary body 3, and transmits operation information in accordance with an operator's operation (e.g., operation information including rotation information that shows the rotation state of the turntable RP1).

As shown in Fig. 1, the operation unit 4 includes the rotating body 41 and a touch sensor 42 provided for the rotating body 41. Further, as shown in Fig. 2, the operation unit 4 includes the hall elements 43, a gyroscope sensor 44, and a control section 45 provided for the rotating body 41.

The rotating body 41 is formed into a disk shape similar to a record disk. The rotating body 41 is placed on the turntable RP1 to rotate with the turntable RP1. An operator directly operates the rotating body 41. The rotating body 41 has, in substance, a diameter as follows. When the rotating body 41 is placed on the top surface RPA of the record player RP, the extending portion 32 of the stationary body 3 partially overlaps with the rotating body 41 as seen from a position facing the top surface RPA. Specifically, a diameter of the rotating body 41 is substantially the same as the diameter of the LP disk.

A hole 411 is provided at a center portion of the rotating body 41. A boss RP11 protruding at a center portion of the turntable RP1 is inserted into the hole 411.

The touch sensor 42 is provided over a substantially entire portion of a top surface 41A of the rotating body 41, the top surface 41A being a surface of the rotating body 41 opposite to the turntable RP1. The touch sensor 42 detects an operator's pressing operation (touch operation) for rotating the rotating body 41 and the turntable RP1. When the top surface 41A is pressed by an operator, the touch sensor 42 outputs, to the control section 45, a signal showing that the pressing operation is performed by the operator. The touch sensor 42 may adopt a variety of sensing systems, such as an electrostatic capacitance system.

The hall elements 43 and the magnetic body 33 form a rotation detector RD detecting a rotation state of the rotating body 41. That is, the operation device 2 includes the rotation detector RD.

The hall elements 43 are arranged at regular intervals along an outer circumference of the disk-shaped rotating body 41. That is, the hall elements 43 are arranged at regular intervals along a circumferential direction of the rotating body 41 to overlap with the magnetic body 33, as seen from a position facing the top surface RPA, when the rotating body 41 is rotated with the turntable RP1. Although 12 hall elements 43 are provided in the exemplary embodiment, the number of the hole elements 43 is not limited thereto.

The hall elements 43 are each independently connected to an analyzing unit 46 described below of the control section 45. When each hall element 43 approaches the magnetic body 33 by rotating the rotating body 41 together with the turntable RP1, each hall element 43 outputs, to the analyzing unit 46, electromotive force generated by Hall effect in response to a magnetic field generated in the magnetic body 33.

The gyroscope sensor 44 detects not only a rotation state of the rotating body 41 but also a rotation state of the turntable RP1. That is, the gyroscope sensor 44 detects not only an angular velocity in the circumferential direction of the rotating body 41 but also an angular velocity of the turntable RP1, and outputs the detected angular velocities to the control section 45.

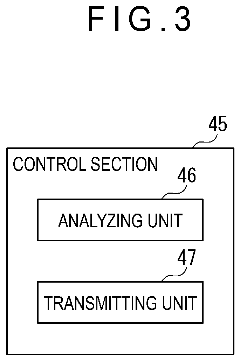

Fig. 3 is a block diagram showing a configuration of the control section 45.

As shown in Fig. 3, the control section 45 is a module including the analyzing unit 46 and a transmitting unit 47. The control section 45 includes a circuit element driven by electric power supplied from a battery (not shown).

The analyzing unit 46 analyzes a rotation state of the rotating body 41 based on an electric signal input from each hall element 43 and an angular velocity input from the gyroscope sensor 44. Specifically, the analyzing unit 46 analyzes, as the rotation state of the rotating body 41, a rotation angle, rotation direction, and rotation speed of the rotating body 41. For instance, the rotation direction is obtainable by analyzing a waveform of the electric signal input from the hall element 43. Further, the rotation speed is obtainable based on the number of the hall elements 43 which output the electric signal per unit time from among the hall elements 43 arranged at regular intervals along the circumferential direction of the rotating body 41. The same applies to the rotation angle. Further, in analyzing the rotation state of the rotating body 41 based on the electric signal input from each hall element 43, the analyzing unit 46 corrects an error in the analyzed rotation state using the angular velocity input from the gyroscope sensor 44.

The transmitting unit 47 wirelessly transmits, as the rotation information showing the rotation state of the turntable RP1, operation information including rotation information that shows the rotation state of the rotating body 41 analyzed by the analyzing unit 46. Further, the transmitting unit 47 transmits operation information in accordance with a detection result for the operator's pressing operation detected by the touch sensor 42.

The transmission of the operation information by the transmitting unit 47 is performed by a communication system in accordance with Near Field Communication standards such as Bluetooth (registered trademark).

### Details of Controller

The controller 5 shown in Fig. 1 communicates wirelessly with the operation unit 4 and outputs a playback control signal for controlling a playback state of a music piece based on the operation information received from the operation unit 4. Then, a playback device (not shown) connected to the controller 5 plays music piece data and adds a variety of sound effects to the music piece data being played based on the playback control signal input thereto.

In the exemplary embodiment, the controller 5 is provided, for instance, by an information processing device such as a personal computer (PC). A storage such as Hard Disk Drive (HDD) of the information processing device can store a plurality of pieces of music piece data, and a Central Processing Unit (CPU) of the information processing device can play the music piece data in accordance with the playback control signal. That is, the information processing device that can function as the controller 5 can function as the playback device for music piece data.

Thus, the playback control system 1 can also function as an acoustic playback system including the record player RP, the operation device 2, and the information processing device having the function of the controller 5 and the function of the playback device for playing the music piece in accordance with the playback control signal.

### Effects of Exemplary Embodiment

The playback control system 1 according to the exemplary embodiment described above can achieve the following effects.

The operation device 2 included in the playback control system 1 functions as the detection device for detecting a rotation state of the turntable RP1. The operation device 2, which is disposed on the turntable RP1 of the record player RP, includes the rotating body 41 rotating with the turntable RP1, the rotation detector RD for detecting the rotation of the rotating body 41, and the transmitting unit 47 for transmitting rotation information that shows the rotation state of the rotating body 41 detected by the rotation detector RD. The rotation detector RD includes the hall elements 43 and the magnetic body 33. The hall elements 43 are provided in the rotating body 41, and the magnetic body 33 is provided on the record player RP. The transmitting unit 47 transmits the rotation information based on the electric signal output from the hall element 43.

In this structure, the rotation detector RD for detecting the rotation state of the rotating body 41 disposed on the turntable RP1 includes the hall elements 43 provided in the rotating body 41 and the magnetic body 33 provided on the record player RP. This structure makes it possible to accurately detect the rotation state of the rotating body 41 based on the number of and arrangement of the hall elements 43 provided in the rotating body 41 and a waveform of the electric signal input from each hall element 43. Thus, the rotation state of the rotating body 41 and the rotation state of turntable RP1 can be detected with higher accuracy than a case where the rotation state of the rotating body 41 is detected only using the gyroscope sensor 44. In other words, the input operation performed on the rotating body 41 (i.e., the rotation operation performed on the turntable RP1) can be detected with high accuracy.

The accurate rotation information can be transmitted to an external device such as the controller 5 by the transmitting unit 47 transmitting the rotation information that shows the rotation state of the rotating body 41.

In a structure not falling under the invention where the hall elements 43 are provided for the record player RP and the magnetic body 33 is provided for the rotating body 41, signal lines extending from the hall elements 43 to be connected to the control section 45 (in particular, the analyzing unit 46) are required to be provided for the record player RP. Further, the analyzing unit 46 and the transmitting unit 47 are also required to be provided for the record player RP. This structure makes it impossible to use an existing record player, and complicates wiring in the record player RP.

In the structure of the exemplary embodiment, the hall elements 43 are provided in the rotating body 41 and the magnetic body 33 is provided on the record player RP. The operation device 2 can thus be formed by the magnetic body 33 fixed to the record player RP by a predetermined means and the operation unit 4 disposed on the turntable RP1, achieving a simple structure of the operation device 2.

Operators (especially DJ) prefer to use familiar devices, and the operation device 2 in which any existing record player RP is usable can meet such operator's demand.

The hall elements 43 are arranged at regular intervals along the circumferential direction of the rotating body 41.

In this structure, the electric signal in accordance with the rotation direction of the rotating body 41 is sequentially output from each hall element 43 due to the Hall effect generated between the magnetic body 33 and the rotating body 41 rotating together with the turntable RP1. On the basis of each electric signal, the rotation angle, rotation speed, and rotation direction of the rotating body 41 can be analyzed as described above. The transmitting unit 47 can thus transmit the rotation information including the rotation angle, rotation speed, and rotation direction of the rotating body 41 as the rotation information showing the rotation state of the turntable RP1.

The rotation information includes at least one of the rotation speed, the rotation direction, and the rotation angle of the rotating body 41.

Upon receiving the rotation information, the controller 5 outputs, based on the rotation information, the playback control signal in accordance with the operator's operation performed on the turntable RP1.

The operation unit 4 of the operation device 2 includes the gyroscope sensor 44 provided for the rotating body 41 and configured to detect the rotation state of the rotating body 41.

In this structure, the rotation state of the rotating body 41 detected by the hall elements 43 can be corrected by the rotation state of the rotating body 41 detected by the gyroscope sensor 44. Further, since the transmission of operation information including the rotation information based on the detection result by the gyroscope sensor 44 is insusceptible to a failure of the hall elements 43, the music piece being played by the operation device 2 can be kept from being stopped in the event of hall elements failure.

The operation unit 4 of the operation device 2 includes the touch sensor 42 provided for the rotating body 41 and configured to detect the pressing operation performed on the rotating body 41. The transmitting unit 47 transmits the operation information in accordance with the detection result by the touch sensor 42. The touch sensor 42 may adopt a variety of sensing systems, such as an electrostatic capacitance system.

In such a structure, both the operation unit 4 and the operation device 2 have enhanced versatility. Further, upon receiving the operation information transmitted from the transmitting unit 47, the controller 5 can execute a predetermined process.

The playback control system 1 includes the operation device 2 as the detection device and the controller 5 configured to transmit the control signal for controlling the playback state of the music piece based on the rotation information transmitted from the operation device 2.

Such a structure achieves similar effects as those achieved by the above-described operation device 2.

### Modifications of Exemplary Embodiment

In the above exemplary embodiment, the plurality of hall elements 43 are arranged along the circumferential direction of the rotating body 41. Specifically, the 12 hall elements 43 are provided in the above exemplary embodiment. The number of the hall elements 43, however, may be changed as appropriate. That is, a single hall element 43 may be provided. Also in this structure, the rotation speed and rotation direction of the turntable RP1 and the rotating body 41 can be detected based on the electric signal output from the hall element 43 along with the rotation of the turntable RP1 and the rotating body 41. Alternatively, the hall elements 43 may not be arranged at regular intervals along the circumferential direction of the rotating body 41, for instance, if the analyzing unit 46 stores the arrangement position of the hall elements 43 in advance to obtain the arrangement position of the hall elements 43.

In the above exemplary embodiment, the magnetic body 33 is provided for the record player RP, and the hall elements 43 are provided for the rotating body 41. in a structure not falling under the invention, the hall elements 43 may be provided for the record player RP and the magnetic body 33 may be provided for the rotating body 41. In this structure, the analyzing unit 46 and the transmitting unit 47 may be provided for the record player RP.

In the above exemplary embodiment, the rotation information transmitted by the transmitting unit 47 includes the rotation angle, rotation speed, and rotation direction of the rotating body 41. The rotation information, however, is not limited thereto. It is only required for the rotation information to include at least one of the rotation angle, rotation speed, and rotation direction of the rotating body 41.

In the above exemplary embodiment, the operation unit 4 includes the gyroscope sensor 44 provided for the rotating body 41 and configured to detect the rotation state of the rotating body 41. The gyroscope sensor 44, however, may not be provided.

Further, the analyzing unit 46 corrects, based on the detection result by the gyroscope sensor 44, the rotation state of the rotating body 41 detected based on the electric signal output from the hall elements 43. Instead of this, the rotation state of the rotating body 41 detected based on the detection result of the gyroscope sensor 44 may be corrected by the rotation state of the rotating body 41 detected based on the electric signal output from the hall elements 43.

In the above exemplary embodiment, the operation unit 4 includes the touch sensor 42 provided on the top surface 41A of the rotating body 41. The touch sensor 42, however, may not be provided, and the position where the touch sensor 42 is provided is not limited to the top surface 41A.

Further, the transmitting unit 47 may be configured to transmit the rotation information when the touch sensor 42 has detected the operator's pressing operation performed on the rotating body 41.

In the above exemplary embodiment, the playback control system 1 includes the operation device 2 as the detection device and the controller 5. The operation device 2, however, may transmit the operation information including the rotation information directly to the playback device for playing music piece data based on the rotation information received from the operation device 2. That is, the operation device 2 may be configured as a detection device for detecting a rotation state of the turntable RP1. How to use the operation device 2 is not limited to the above.

Further, the operation device 2 and the record player RP (turntable RP1) may be configured as an operation device for the playback device for playing the music piece. The operation device 2, the record player RP (turntable RP1), and the controller 5 may be configured as a control system.

### EXPLANATION OF CODES

1...playback control system, 2...operation device (detection device), 3...stationary body, 33...magnetic body, 4...operation unit, 41...rotating body, 42...touch sensor, 43...hall element, 44...gyroscope sensor, 45...control section, 46...analyzing unit, 47...transmitting unit, 5...controller, RP...record player, RP1...turntable.

## Claims

1. A detection device (2), comprising:
a rotating body (41) disposed on a turntable (RP1) of a record player (RP) and configured to rotate with the turntable (RP1);
a rotation detecting unit (RD) configured to detect rotation of the rotating body (41); and
a transmitter (47) configured to transmit rotation information showing a rotation state of the rotating body (41) detected by the rotation detecting unit (RD), wherein
the rotation detecting unit (RD) comprises a hall element (43) and a magnetic body (33),
the hall element (43) is provided in the rotating body (41),
the magnetic body (33) is provided on the record player (RP), and
the transmitter (47) is configured to transmit the rotation information based on an electric signal output from the hall element (43).

2. The detection device (2) according to claim 1, wherein
the hall element (43) comprises a plurality of hall elements (43),
and the plurality of hall elements (43) are arranged at regular intervals along a circumferential direction of the rotating body (41).

3. The detection device (2) according to claim 1 or 2, wherein
the rotation information comprises at least one of a rotation speed of the rotating body (41), a rotation direction of the rotating body (41), and a rotation angle of the rotating body (41).

4. The detection device (2) according to any one of claims 1 to 3, further comprising a gyro sensor (44) provided for the rotating body (41) and configured to detect the rotation state of the rotating body (41).

5. The detection device (2) according to any one of claims 1 to 4, further comprising a touch sensor (42) provided for the rotating body (41) and configured to detect a pressing operation performed on the rotating body (41), wherein
the transmitter (47) is configured to transmit operation information in accordance with a detection result by the touch sensor (42).

6. A playback control system (1) comprising:
the detection device (2) according to any one of claims 1 to 5; and
a controller (5) configured to transmit a playback control signal with which a playback state of a music piece is controlled based on the rotation information transmitted from the detection device (2),

## Patentansprüche

1. Eine Detektionsvorrichtung (2), umfassend:
einen Drehkörper (41), der auf einem Drehteller (RP1) eines Plattenspielers (RP) angeordnet und dazu eingerichtet ist, sich mit dem Drehteller (RP1) zu drehen;
eine Rotationsdetektionseinheit (RD), die dazu eingerichtet ist, eine Rotation des Drehkörpers (41) zu detektieren; und
einen Sender (47), der dazu eingerichtet ist, Rotationsinformationen zu senden, die einen von der Rotationsdetektionseinheit (RD) detektierten Rotationszustand des Drehkörpers (41) zeigen, wobei
die Rotationsdetektionseinheit (RD) ein Hall-Element (43) und einen Magnetkörper (33) umfasst,
das Hall-Element (43) in dem Drehkörper (41) angeordnet ist,
der Magnetkörper (33) an dem Plattenspieler (RP) angeordnet ist, und
der Sender (47) dazu eingerichtet ist, die Rotationsinformationen auf der Grundlage eines von dem Hall-Element (43) ausgegebenen elektrischen Signals zu senden.

2. Die Detektionsvorrichtung (2) gemäß Anspruch 1, wobei
das Hallelement (43) eine Vielzahl von Hallelementen (43) umfasst,
und die Vielzahl von Hallelementen (43) in regelmäßigen Abständen entlang einer Umfangsrichtung des Drehkörpers (41) angeordnet sind.

3. Die Detektionsvorrichtung (2) gemäß Anspruch 1 oder 2, wobei
die Rotationsinformation mindestens eines der Folgenden umfasst: eine Rotationsgeschwindigkeit des Drehkörpers (41), eine Rotationsrichtung des Drehkörpers (41) und einen Rotationswinkel des Drehkörpers (41).

4. Die Detektionsvorrichtung (2) gemäß einem der Ansprüche 1 bis 3, ferner umfassend einen Gyrosensor (44), der für den Drehkörper (41) bereitgestellt und dazu eingerichtet ist, den Rotationszustand des Drehkörpers (41) zu detektieren.

5. Die Detektionsvorrichtung (2) gemäß einem der Ansprüche 1 bis 4, ferner umfassend einen Berührungssensor (42), der für den Drehkörper (41) bereitgestellt und dazu eingerichtet ist, eine an dem Drehkörper (41) ausgeführte Druckbetätigung zu detektieren, wobei
der Sender (47) dazu eingerichtet ist, Betätigungsinformationen gemäß einem Detektionsergebnis durch den Berührungssensor (42) zu senden.

6. Ein Wiedergabesteuerungssystem (1), umfassend:
die Detektionseinrichtung (2) gemäß einem der Ansprüche 1 bis 5; und
eine Steuerung (5), die dazu eingerichtet ist, ein Wiedergabesteuersignal zu senden, mit dem ein Wiedergabestatus eines Musikstücks auf der Grundlage der von der Detektionseinrichtung (2) gesendeten Rotationsinformation gesteuert wird.

## Revendications

1. Dispositif de détection (2), comprenant :
un corps tournant (41) disposé sur un plateau tournant (RP 1) d'un tourne-disque (RP) et configuré pour tourner avec le plateau tournant (RP1) ;
une unité de détection de rotation (RD) configurée pour détecter la rotation du corps tournant (41) ; et
un émetteur (47) configuré pour transmettre des informations de rotation indiquant un état de rotation du corps tournant (41) détecté par l'unité de détection de rotation (RD), dans lequel
l'unité de détection de rotation (RD) comprend un élément Hall (43) et un corps magnétique (33),
l'élément Hall (43) est prévu dans le corps tournant (41),
le corps magnétique (33) est prévu sur le tourne-disque (RP), et
l'émetteur (47) est configuré pour transmettre les informations de rotation sur la base d'un signal électrique sorti par l'élément Hall (43).

2. Le dispositif de détection (2) selon la revendication 1, dans lequel
l'élément Hall (43) comprend une pluralité d'éléments Hall (43),
et la pluralité d'éléments Hall (43) sont disposés à intervalles réguliers le long d'une direction circonférentielle du corps tournant (41).

3. Le dispositif de détection (2) selon la revendication 1 ou 2, dans lequel
les informations de rotation comprennent au moins une d'une vitesse de rotation du corps tournant (41), d'une direction de rotation du corps tournant (41) et d'un angle de rotation du corps tournant (41).

4. Le dispositif de détection (2) selon l'une quelconque des revendications 1 à 3, comprenant en outre un capteur gyroscopique (44) prévu pour le corps tournant (41) et configuré pour détecter l'état de rotation du corps tournant (41).

5. Le dispositif de détection (2) selon l'une quelconque des revendications 1 à 4, comprenant en outre un capteur tactile (42) prévu pour le corps tournant (41) et configuré pour détecter une opération d'appui effectuée sur le corps tournant (41), dans lequel
l'émetteur (47) est configuré pour transmettre des informations d'opération conformément à un résultat de détection par le capteur tactile (42).

6. Système de contrôle de lecture (1) comprenant :
le dispositif de détection (2) selon l'une quelconque des revendications 1 à 5 ; et
un contrôleur (5) configuré pour transmettre un signal de contrôle de lecture avec lequel un état de lecture d'un morceau de musique est contrôlé sur la base des informations de rotation transmises par le dispositif de détection (2).
